# EUROPEAN PATENT APPLICATION

(11) **EP 1 382 585 A2**
(43) Date of publication of application: **21.01.2004**
(21) Application number: 03011298.1
(22) Date of filing: 19.05.2003
(51) Int. Cl.: C04B 33/13, C04B 35/16, C04B 38/06

(54) **Transformation method of products containing asbestos**

(30) Priority: 31.05.2002 IT BO20020336
(71) Applicant: Nannini, Maurizio, 44012 Bondeno (Ferrara) (IT); Tralli, Remo, 44017 Scortichino (Ferrara) (IT)
(72) Inventor: Nannini, Maurizio, 44012 Bondeno (Ferrara) (IT); Tralli, Remo, 44017 Scortichino (Ferrara) (IT)
(74) Representative: Paolini, Elena

(57) **Abstract**

Transformation method for products containing asbestos, comprising several working steps, such as grinding, adding components like calcined alumina, clay and material giving porosity, sintering.

## Description

The invention refers to a new method for the amiantus clearing and/or for waste with amiantus so to make the same innocuous and salubrious and to obtain manufacture for building or for other uses. The method, other to transform the amiantus and the waste containing amiantus, permits to have products with an economic advantage so to pay the transformation expenses both to avoid the disposal expenses. Said method comprises several working phases and the adding of components like calcined alumina, clay and materials given porosity. The transformation method and the added components permit to have materials with chimical/physical features so to justify their use in building being the same equal to common materials used. The amiantus danger and of the waste with amiantus is actually greatly proved to studies made since the forty age and also, unfortunately, to the large cases of tumours which struck the exposed persons or in such a way in contact with the cited substance.

So being conscious of the big toxicity of the amiantus and verified the connexion between the tumour beginning and the casual exposition and for very little parts of this substance, a lot of states have issue special laws so to prevent its use. Generally in the different states jurisprudence the retroactivity principle is not enforced and consequently the laws prevent the amiantus use to their issuing but they leave unsolved all that was present before the issuing of the same laws. It is so arisen the problem of the disposal of all already existing and, considering the big pericolosity of the substance, it is always big the necessary expense for actuating said disposal. According to the prior art are known methods which actuate the storage in special burrows for toxic waste, the encapsulation with hydraulic and/or chemical ligands and the englobing by means of resins.

All these solutions do not actuate the finally disposal but they only remove th'e problem in the time such as they do not eat and modify the amiantus structure in other no toxic structure. The invented transformation method of products or waste containing amiantus provides several working phases and the adding of particular substances so to modify the intrinsic structure of the materials to be cleared. The working phases, with the adding in the convenient time of particular substances, are the necessary and sufficient condition to make the wanted transformations so to have mineralogical transformations which have no more the amiantus structure. Moreover each cited phase with the adding of the substances with the elements necessary for the transformations are a sole part of the method such as said transformations are not possible if no with particular conditions. The invented method consists of nine working phases with the adding, during the working, of the elements useful for the transformations.

The first phase is the grinding. The amiantus and the waste with amiantus are placed inside a jaw crusher to obtain the pieces for the subsequent tertiary crushing inside an aro mill.

This particular mill is able to reduce the amiantus and the waste with amiantus in a dimension not higher to millimetre 0,063. The material going out to said mill is sent to a wind separator regulated in such a way that the pieces of bigger dimension of millimetre 0,063 are recycled in the same will till the dimension of the same is not less of millimetre 0,063. Obtained the wanted dimension the material is storated in a seal container. The second phase regards the dosing. The micronized amiantus or the waste with amiantus are weighed and also the other used components are weighed: the calcined alumina, the clay and the materials given porosity. What materials given porosity are generally used the wood flour or the hazel-shell flour. This last component changes in the use with different weight percentage on the base that the wood flour or the hazel-sheel flour are used. The third working phase is the mixing. The components dosing by weighing and determined the percentages of each components are put inside a counter-rotating mixer with vortex to reach the homogenization of the mixture. In this water nebulized water is added in degree from 20% to 35% of the total of dry weight of the components on the base of the necessity to obtain the necessary plasticity for the extrusion. The next phase is the extrusion.

In this phase a normal extruder for the production of building goods is used. The working inside the extruder permits to realize a plastic mass that, forced through a die chaser, realizes a semi-manufactured product to be used in the next workings. The fifth phase is the dimensioning.

The obtained semi- manufactured product is automatically cut and dimensioned in the wanted sizes.

The sixth phase is the drying. The semi-manufactured product is dried with temperature lower to 100°C since it does not reach a consistence such to be handled without possibility of deformations.

The next phase is the burning. In said phase the manufactures, dried with a residual damp no upper to 1%, are passing inside furnaces which reach temperature till 1250°C. The cooking cycle is the following: in two hours it is coming to 350°C, in other two hours it is coming to 550°C, in other two hours it is coming to 800°C, in other three hours it is coming to 1050°C, in other two hours it is coming to 1180°C and at the end in other four hours it reachs the 1200°C.

At the end of this burning phase the manufacture is put in a natural cooling. After this manufacture transformation phase by means of sintering in cooking the next phase of the inspection is made on the base of the necessary requirements for the next uses. In this phase the amiantus is not more present inside the manufacture. The ninth and last phase is the packaging/storing.

The obtained manufacture, without amiantus, is then packaging and stored so ending the working cycle. The so obtained materials have insulator and refractory features and they can have all the certifications requested for the materials used in building. The invented method is consequently very economical other to solve the problem of the amiantus disposal definitively such at the end of the working phases the amiantus is not more present but are present only other non toxic minerals. In the invented method foundamental is the presence, in addition to the cooking phase that putting thermal energy realizes the transformations, of the components put in the dosing and mixing phases. In said phases the quantity per cent of the amiantus or of the waste with amiantus is of a value from 30% to 40% of the dried mixture. Determined this quantity refractory clay is added in quantity per cent comprising till the 30% of the weight. The clay issues in the mixture have the function of sintering ligand and of oxides bearer so transforming the crystallographic structure of the amiantus in a hightly stable form formed to the oxides of the elements which form the same amiantus. In the mixing phase is put a material given porosity in ths mass in working so to lighten the structure in a percentage to be varied on the base of the wanted features of the final product. Other foundamental component to add to the dosing and to the mixing is the calcined alumina in quantity per cent from 26% to 30% of the dried weight. The alumina, i.e. the metallic oxide contained in the alum, is to be obtained through different processes.

An industrial process to obtain the same is Le Chatelier-Löwing process where the bauxite, i.e. the alumina metatrihydrate, is fused at 1000-1200°C with soda ash inside rotary kiln and it is lixiviated with hot water. The alumina trihydrate is changed in hydroxyaluminate which passes in solution Al₂O₃ + 2NaOH + 3H₂O = 2Na [Al(OH₄ )]

From the filtered solution it is precipitated with carbon dioxide at 70°C to the aluminum at the state of pure hydroxide 2Na [Al(OH₄)] + CO₂= 2Al(OH₃) + Na₂CO₃ + H₂O which changes in oxide for liming at 1200°C - 1700°C. The calcined alumina is preferred in this method such as it thinly divided is extremely reactive so permitting to have final goods with good features of loading resistance and to the high temperatures. With the aim to realize the invented method are to be used also other types of aluminum but with hydroxil groups which in hot come to alloy with the amiantus or with the waste with amiantus. This because, if it is not aluminum with hydroxil groups but substances with alkaline base always the transformation of the amiantus in other innocuous minerals is obtained, of course making the cited phases, by the final goods have a vitreous structure no suitable to be used at the moment for building manufactures. The calcined alumina, thanks to its structure, loss in hot the hydroxil groups practically contemporary with the amiantus or waste with amiantus, it renders available the valences of the aluminum that, reacting with the mineral oxide deoxidizing of the amiantus brings to the formation of different mineralogic structures.

The diversity of the mineralogic structures is due to the composition of the material to be clear and to the minimum percentage variability of the elements put in the dosing or/and in the mixing. The transformation method infact changes the amiantus or waste with amiantus in other no toxic minerals like mullite, faialite, ghelenite, corundum, hematite, cordierite and wollastonie. So having materials to be used for manufactures no harmful. The variability of the obtained manufactures is due to the type of amiantus or waste with amiantus and to the minimum variability of the components used in the dosing and in the mixing. The amiantus infact is a mineral belonging to the anphibole (i.e. calcium silicates and magne sium silicates) or to the serpentine (magnesium silicate) and it presents itself in different forms. Belonging to the anphibole, with the presence of magnesium silicate, calcium and iron, are the crocidolite and the amosite. Belonging instead to the magnesium silicates is the chrysotile.

This type of amiantus is the more used for its physical features which permit easy working.

Other types of amiantus are the actinolite, the anthophyllite and the tremolite. The lowest common denominator of the different types of amiantus is the presence of hydroxil groups in form of water of hydration (H-O-H). With high temperatures the hydroxil group presentsin the amiantus abandons the structure and almost contemporary the calcined alumina losses at hot the hydroxil groups making available the valences of the aluminum. These, reacting with the oxides of the dehydroxyling minerals of the amiantus, give the formation of minerals with different mineralogic structure, that is minerals innocuous for the health as cited to the exit of the transformation method.

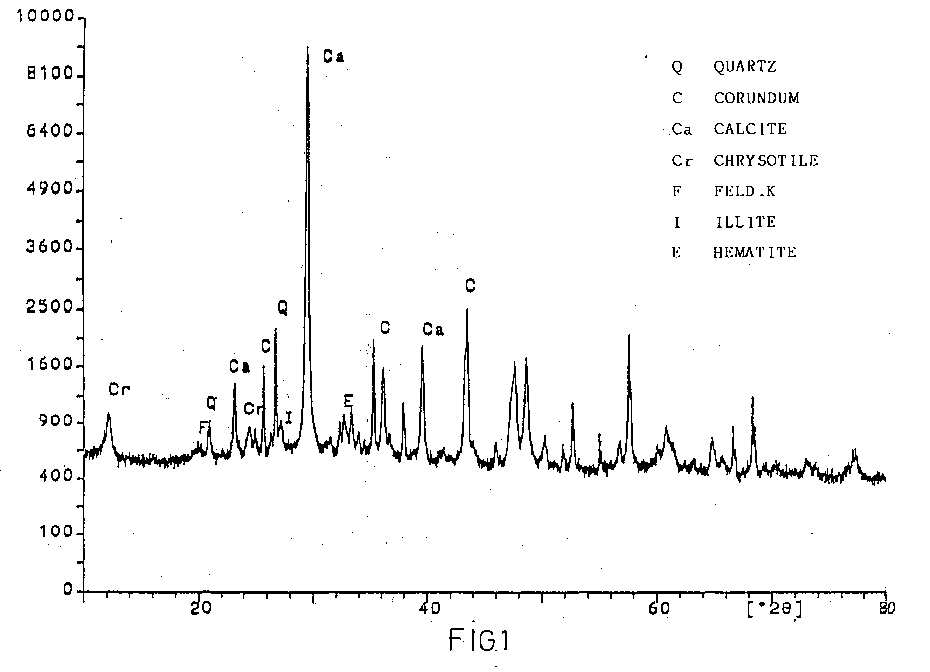

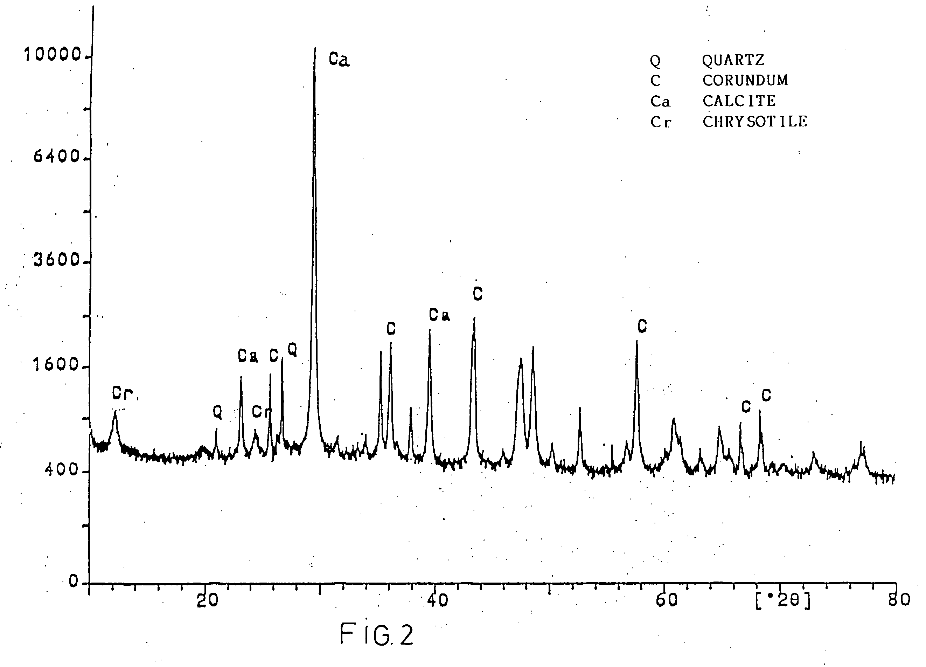

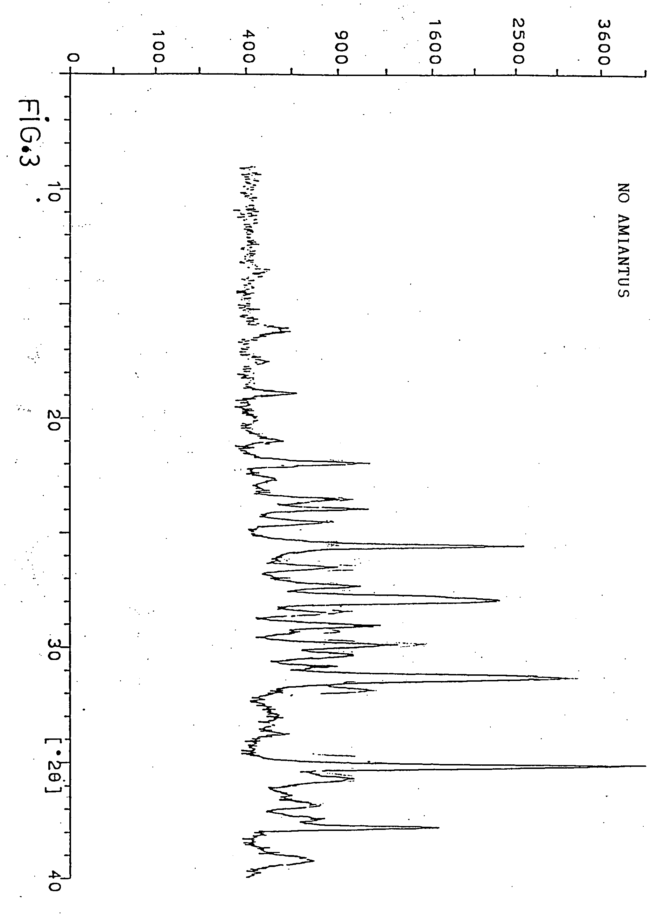

Also the clay issues has the function to oxide bearer for the reaction at the solid state at hot and of sintering ligand. All the obtained materials are permanent mineral structures. For an example and for test of the invented method are showed in sheets 1, 2, 3, 4 and 5 the chimic analysis X RF oxides with fusions make on the base of the reference set of rules and with x-ray diffractometer. In sheet 1 figure 1 is DRX graphics for the test of a sample of cement and amiantus. The amiantus is present like chrysotile and it is illustrated in the first and in the fifth peak. In sheet 2 the figure 2 is graphic for the text of a sample, always with the same cited manners, of "eternit" in dust with pieces bigger of millimetre 0,063, that is with grain bigger of what provided to the invented method. Also in this analysis amiantus is present in form of chrysotile. In sheet 3 figure 3 is DRX graphic of the test of a sample obtained with the invented method , that is mixing 40% of eternit with 30% of calcined aluminaand 30% of clay. The obtained mixing, adding 20-35% of water to the mixture of the first two elements and mixing is formed, dried and cooked till 1200°C with the modes cited. After its cooling is made the test with the same mode of the previous test.

The test shows that the amiantus is totally absent.

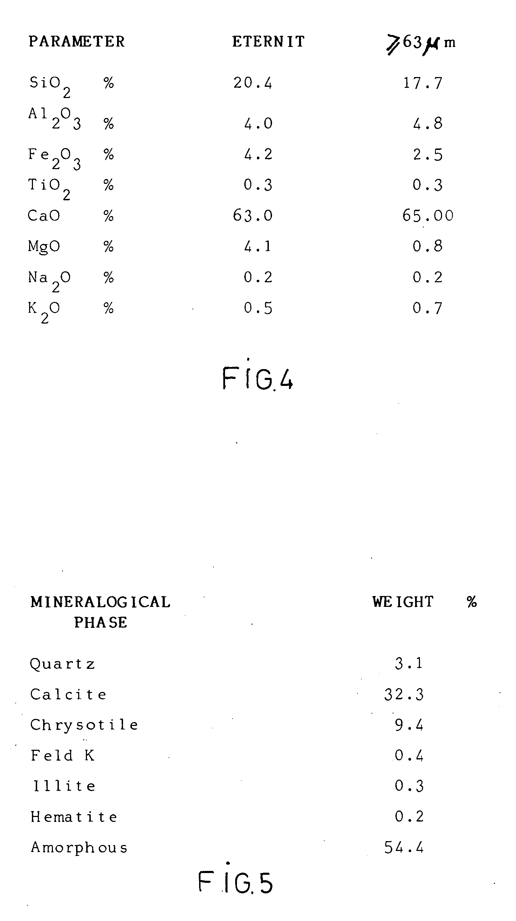

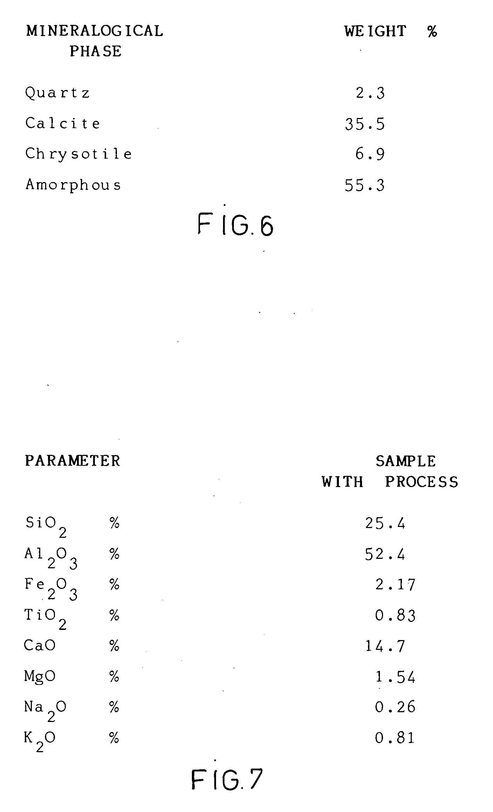

In sheet 4 figure 4 is showeda table with the completion of the chimical test in percentage of the eternit and of the same in grain bigger or equal to millimetre 0,063. Figure 5 is table shows the percentuage of the eternit minerals expressed in weigh percentage. In sheet 5 figure 6 is table with the weight percentage for the eternit sample in grain bigger or equal to millimetr tre 0,063; it to be noted that the amiantus is always present like chrysotile. In figure 7 is showed a table with the minerals percentages present in the sample subjected to the invented method. All the form expressed like graphics are obtained with x-ray diffractometer on the base of rules POS 031/99. All the illustrated table are instead obtained with chimical analysis XRF eight oxides, with fusion, on the base of rules POS 011/00. It is to be noted that the tests confirm what previous cited. The material obtaind by the present method is to be directly used in the building or for the production of different articles. The above cited example is given for the sole aim to illustrate the invented method. The realization forms are explanatory and not limitative of the invented method. Each actuative form is to be considered inside the method if technical equivalent on the base of the used substances. It is to point out that the foundamental feature of the method is to produce building material and articles economically advantageous and it solves the problem of disposal of amiantus of waste with amiantus.

## Claims

1. Transformation method of products containing amiantus, **characterized in that** it comprises several working phases and the adding of components like calcined alumina , clay and materials given porosity like wood flour or hazel-shell flour.

2. Transformation method of products containing amiantus, as per claim 1, **characterized in that** the working phases are nine: a grinding phase, where the amiantus or the waste with amiantus are reduced in a dimension not higher to millimetre 0,063, a phase of dosing in where the different components are weighed, a phase of mixing where the components are put inside a mixer adding nebulized water in degree from 20 to 35% of the total of dry weight, a phase of extrusion to realize a plastic mass, a phase of dimensioning, a fase of drying where the semi-manufactured product is dried with temperature lower to 100°C, a phase of burning where the manufactures are passing inside furnaces which reach temperature till 1250°C, a phase of inspectin and a last phase of packaging/storing where the manufacture, without amiantus, is packaging and stored so ending the working cycle.

3. Transformation method of product containing amiantus, as per claims 1 and 2, **characterized in that** the quantity per cent of the amiantus or of the waste with amiantus is of a value from 30% to 40% of the dried mixture, fixed this quantity refractory clay is added in quantity per cent comprising till the 30% of the weight with the function of sintering ligand and of oxides bearer so transforming the crystallographic structure of the amiantus in a hightly stable form formed to the oxides of the elements which form the same amiantus, whereas, in the mixing phase, the issue of a material given porosity brings to lighten the structure.

4. Transformation method of product containing amiantus, as per claim 1, **characterized in that** the calcined alumina adding to the dosing and to the mixing in quantity per cent from 26% to 30% of the dried weight, is preferred in the method such as it thinly divided is extremely reactive so permitting to have final goods with good features of loading resistance and to the high temperatures.

5. Transformation method of product containing amiantus, as per claim 1, **characterized in that** in the use the weight percentage of material given prosity is different if it is use wood flour or hazel-shell flour.
